# EUROPÄISCHE PATENTSCHRIFT

(11) **EP 2 591 663 B1**
(45) Veröffentlichungstag und Bekanntmachung des Hinweises auf die Patenterteilung: **14.10.2015**
(21) Anmeldenummer: 12007573.4
(22) Anmeldetag: 07.11.2012
(51) Int. Cl.: A01D 78/10, A01B 73/06

(54) **Landwirtschaftliche Maschine**
Agricultural machine
Machine agricole

(30) Priorität: 09.11.2011 DE 202011107678 U
(43) Veröffentlichungstag der Anmeldung: 15.05.2013
(73) Patentinhaber: Alois Pöttinger Maschinenfabrik Ges.m.b.H., 4710 Grieskirchen (AT)
(72) Erfinder: Reiter, Stefan, 4663 Laakirchen (AT); Ruttinger, Peter, 4720 Kallham (AT); Angleitner, Norbert, 4682 Geboltskirchen (AT)
(74) Vertreter: Thoma, Michael

(56) Entgegenhaltungen:
- EP-A1- 1 859 670
- EP-A1- 2 179 641

## Beschreibung

Die vorliegende Erfindung betrifft eine landwirtschaftliche Maschine, die als Heuwerbungsmaschine, vorzugsweise in Form eines Zetters oder Schwaders ausgebildet sein kann, mit einem an einen Schlepper anbaubaren Fahrrahmen, der über ein Fahrwerk am Boden abgestützt ist, sowie zumindest einem Arbeitsaggregat zur Futter- oder Bodenbearbeitung, das an einem Tragrahmen gelagert ist, der relativ zum Fahrrahmen zusammen mit dem Arbeitsaggregat von einer Hub-/ Schwenkvorrichtung in eine Vorgewende- und eine Transportstellung aushebbar ist, wobei die Hubschwenkvorrichtung eine Stellzylindereinheit mit mehreren Zylindern und Kolben umfasst.

Bei größeren Heuwerbungsmaschinen mit größeren Arbeitsbreiten, die mehrere nebeneinander angeordnete bzw. in verschiedenen Spuren laufende Rechkreisel umfassen, ist es bekannt, die Heuwerbungsaggregate aushebbar an einem durch ein Fahrwerk am Boden abgestützten Fahrrahmen anzuordnen, so dass die Heuwerbungsaggregate am Vorgewende ausgehoben oder zum Zwecke des Transports noch weiter ausgehoben und ggf. zusammengeklappt werden können. Hierzu ist der Tragrahmen, der die Heuwerbungsaggregate trägt, üblicherweise um eine liegende Querachse schwenkbar an dem Fahrrahmen angelenkt, so dass der Tragrahmen zusammen mit den daran angeordneten Heuwerbungsaggregaten in Form von Rechkreiseln nach vorne/oben verschwenkt bzw. ausgehoben werden kann, wobei der Tragrahmen ggf. abklappbare Seitenteile aufweisen kann, die in der Transportstellung nach vorne geschwenkt werden. Derartige Heuwerbungsmaschinen in Form von Zettern sind beispielsweise aus den Druckschriften EP 18 59 670 A1, EP 21 79 641 A1 oder WO 2010/074558 A1 bekannt.

Bei solchen Heuwerbungsmaschinen stehen dann die Rechkreisel in der Transportstellung mit den Rechzinken nach außen. Die nach vorne an den Fahrrahmen angeklappten Rechkreisel sind in der genannten Transportstellung mit ihren Rechkreiselachsen verkippt, so dass die genannten Rechkreiselachsen etwa liegend quer zur Fahrtrichtung ausgerichtet sind. Eine solche Verkippung der Rechkreisel in der Transportstellung ist an sich nötig, um in der gewünschten Weise eine ausreichend schmale Straßentransportbreite zu erreichen. Dies kann beispielsweise dadurch erreicht werden, dass der Tragrahmen zunächst um eine liegende Querachse insgesamt nach oben geschwenkt wird, so dass die Rechkreisel zunächst mit ihren Kreiselachsen liegend in Fahrtrichtung weisen, woraufhin dann die Seitenteile des Tragrahmens nach vorne geklappt werden können, um die gewünschte Transportstellung zu erreichen, in der sich die Heuwerbungsaggregate entlang des Fahrrahmens erstrecken.

Um die dann nach vorne geklappten Seitenteile bzw. die daran befestigten Arbeitsaggregate abzustützen und gegen Stöße aus Bodenwellen und Unebenheiten zu sichern, kann der Tragrahmen nach dem Einklappen der Seitenteile nochmals um die genannte liegende Querachse ein Stück weiter verschwenkt werden, so dass die Tragrahmenseitenteile bzw. die daran befestigten Arbeitsaggregate in Abstützmulden fahren und dort abgestützt werden. Hierdurch wird die Stellbewegung, die die Hubschwenkvorrichtung auszuführen hat, jedoch relativ kompliziert, da die Schwenkbewegung um die liegende Querachse vor Erreichen der vollständigen Endstellung angehalten werden muss, um die Seitenteile hereinklappen zu können, so dass ein entsprechender Stellzylinder nicht einfach in seine Endstellung gefahren werden kann, sondern vorher angehalten werden muss.

Weiterhin wird die Steuerung der Stellzylindereinheit nochmals komplizierter, wenn der Tragrahmen nicht nur zwischen Arbeitsstellung und Transportstellung hin- und hergefahren werden soll, sondern auch noch in eine Vorgewendestellung fahrbar sein soll. Am Feldrand bzw. am Vorgewende werden die Arbeitswerkzeuge regelmäßig nur ein Stück weit vom Boden ausgehoben, um beispielsweise über bereits zusammengerechte Schwade hinwegfahren zu können. Hierbei soll der Aushub relativ begrenzt sein, so dass der Antrieb weiterlaufen kann und die Gelenkwellen hierbei keine übermäßigen Knickungen erfahren. Wird das Ausheben in die Vorgewendestellung durch dieselbe Stellzylindereinheit bewirkt, muss diese eine weitere Zwischenposition anfahren können. Hierzu können entweder relativ aufwändige hydraulische Steuermittel wie Sperrventile, Steuerventile und dergleichen Verwendung finden oder mechanisch einschwenkbare Anschläge vorgesehen werden, so dass die Stellbewegung angehalten bzw. unterbrochen werden kann, ohne eine entsprechende Drucksteuerung vorsehen zu müssen. Beides ist jedoch unbefriedigend.

Der vorliegenden Erfindung liegt die Aufgabe zugrunde, eine verbesserte landwirtschaftliche Maschine der eingangs genannten Art zu schaffen, die Nachteile des Standes der Technik vermeidet und Letzteren in vorteilhafter Weise weiterbildet. Insbesondere soll mit einer möglichst einfachen Drucksteuerung ohne aufwändige Ventilanordnungen ein präzises Anfahren sowohl der Vorgewendestellung als auch der Transportstellung ermöglicht werden, wobei insbesondere auch ein feines, zweistufiges Anfahren der Transportstellung ermöglicht werden soll.

Diese Aufgabe wird durch eine landwirtschaftliche Maschine gemäß Anspruch 1 gelöst. Bevorzugte Ausgestaltungen der Erfindung sind Gegenstand der abhängigen Ansprüche.

Es wird also vorgeschlagen, dass einer Kolbenstange in demselben Zylinder zumindest zwei Kolben jeweils verschieblich zugeordnet werden, so dass die Kolbenstange relativ zu jedem der beiden Kolben verschieblich ist, wobei jedem der Kolben ein unterschiedlicher Stellweg und damit eine unterschiedliche Stellbewegung der Kolbenstange zukommt. Erfindungsgemäß sind in zumindest einem der Zylinder der Stellzylindereinheit mehrere Kolben aufgenommen und relativ zu einer in dem Zylinder verschieblich aufgenommenen Kolbenstange verschieblich gelagert, wobei die mehreren Kolben verschiedene, jeweils begrenzte Verschiebebereiche relativ zur Kolbenstange besitzen. Durch die Verschiebbarkeit der beiden Kolben relativ zur Kolbenstange bei gleichzeitiger Aufnahme in demselben Zylinder lassen sich trotz kompakter, einfacher Ausbildung der Stellzylindereinheit verschiedene Stellbewegungen auch ohne komplizierte Drucksteuermittel wie Hydraulikventile oder einschwenkbare Anschlagklappen realisieren. Da jeder Kolben relativ zur Kolbenstange einen anderen Verschiebebereich besitzt, können durch Betätigung der Kolben den Verschiebebereichen entsprechende Stellwege der Kolbenstange erzeugt werden, ohne dass der durch den einen Kolben erzeugte Stellweg durch die begrenzte Verschiebbarkeit des anderen Kolbens behindert bzw. begrenzt wäre.

In Weiterbildung der Erfindung können die Verschiebewege der beiden in demselben Zylinder aufgenommenen Kolben auf der bzw. relativ zu der gemeinsamen Kolbenstange überlappungsfrei ausgebildet sein. Hierdurch wird nicht nur ein kollisionsfreier Betrieb der beiden Kolben erreicht, sondern auch eine weitestmögliche Ergänzung der erzielbaren Stellwege erreicht. Zum anderen ermöglicht die Überlappungsfreiheit der Verschiebewege eine individuelle Anpassung der Kolbenquerschnitte sowie eine abschnittsweise Anpassung der Kolbenstangenquerschnitte an die jeweilige Stellaufgabe. Die Kolben können in Weiterbildung der Erfindung denselben Außendurchmesser besitzen, müssen dies aber nicht. Ebenso kann der Kolbenstangendurchmesser individuell an nur einen der beiden Kolben angepasst sein, um durch die hieraus resultierende effektive Querschnittsfläche, auf der der Fluiddruck wirksam ist, an die gewünschten Stellkräfte anzupassen.

In vorteilhafter Weiterbildung der Erfindung sind durch die beiden in demselben Zylinder aufgenommenen Kolben zwei voneinander unabhängige Stellwege der Kolbenstange relativ zu dem genannten Zylinder erzeugbar, insbesondere derart, dass durch Beaufschlagung des einen Kolbens unabhängig von der Beaufschlagung des anderen Kolbens ein erster Stellweg und durch Beaufschlagung des anderen Kolbens unabhängig von der Beaufschlagung des vorgenannten einen Kolbens ein anderer Stellweg erzeugbar ist. Insbesondere können die jeweils erzeugbaren Stellwege verschiedene Längen besitzen, um durch Beaufschlagung der verschiedenen Kolben verschiedene Hubaufgaben lösen zu können.

In vorteilhafter Weiterbildung der Erfindung kann einer der beiden in demselben Zylinder aufgenommenen Kolben zum Ausfahren der Kolbenstange vorgesehen sein, während der andere der beiden in demselben Zylinder aufgenommene Kolben zum Einfahren der Kolbenstange in den genannten Zylinder vorgesehen ist.

Um den Verschiebeweg der Kolbenstange relativ zum Zylinder nicht durch die Begrenzung der Verschiebewege der beiden verschieblichen Kolben zu begrenzen bzw. zu behindern, ist vorgesehen, dass einer der beiden in demselben Zylinder aufgenommenen Kolben von der Kolbenstange lösbar und in axialer Richtung entfernbar ist, so dass die Kolbenstange mit ihrem Stangenende über die Endposition des genannten Kolbens hinaus bzw. von diesem weg bewegbar ist. Dabei besitzt der genannte Kolben eine der Kolbenstange zugewandte Axialdruckfläche zum Wegdrücken, insbesondere Ausfahren der Kolbenstange. Erreicht der genannte Kolben seine in Richtung des Stellwegs vorgesehene Endposition, kann die Kolbenstange sich nichtsdestotrotz weiterbewegen, beispielsweise wenn auf die Stellzylindereinheit vom Arbeitsaggregat her eine entsprechende Kraft einwirkt und/oder unter Steuerung des weiteren Stellwegs durch den anderen verschieblichen Kolben.

Zusätzlich zu einem von der Kolbenstange lösbaren Kolben nimmt der genannte Zylinder einen verschieblich auf der Kolbenstange sitzenden Kolben auf, der gegen Herunterrutschen von der Kolbenstange gesichert ist. Die Kolbenstange besitzt hierzu vor ihrem freien Ende bzw. auch unmittelbar an ihrem freien Ende eine Endanschlagsfläche, die ein Herunterschieben des genannten Kolbens über das freie Ende der Kolbenstange hinaus verhindert. Vorteilhafterweise ist besagte Endanschlagsfläche an der

Kolbenstange zwischen den beiden verschieblich in dem genannten Zylinder aufgenommenen Kolben vorgesehen.

Die Kolbenstange besitzt dabei vorteilhafterweise zwischen den beiden Kolben ein freies Ende, wobei im Bereich des freien Endes die Kolbenstange eine Verdickung besitzen kann, beispielsweise eine Schulter oder dergleichen. Das genannte freie Ende kann dabei eine Axialdruckfläche bilden, gegen die der von der Kolbenstange lösbar angeordnete Kolben axial drücken kann, um die Kolbenstange auszufahren. Die genannte Verdickung im Bereich des Kolbenstangenendes kann andererseits den anderen verschieblichen Kolben am Herunterrutschen von der Kolbenstange hindern.

Ein freies Ende der Kolbenstange zwischen den beiden Kolben ist vorteilhaft, jedoch nicht zwingend. Grundsätzlich wäre es ebenfalls auch möglich, den genannten lösbaren Kolben ein Stück weit auf die Kolbenstange aufschieben zu können, wobei hier eine Kolbenstangenverdickung zwischen den beiden Kolben dafür sorgen kann, dass die beiden Kolben die Kolbenstange in entgegengesetzte Richtungen beaufschlagen können. Beispielsweise kann eine sacklochartige Vertiefung an dem einen Kolben oder auch eine Durchgangsbohrung vorgesehen sein, wenn die Kolbenstange ausreichend lang ausgebildet ist, ggf. beidseitig durch den Zylinder hindurchtritt. Bevorzugt ist jedoch die vorgenannte Ausbildung mit einem freien Ende der Kolbenstange zwischen den beiden Kolben, da hier einerseits Doppelpassungen vermieden und andererseits eine kurze, kompakte Bauweise erreicht werden kann.

In Weiterbildung der Erfindung sind die Verschiebbarkeiten der beiden Kolben in dem gemeinsamen Zylinder voneinander abgetrennt bzw. sind die genannten Kolben in voneinander abgegrenzten Kammern des Zylinders aufgenommen. In vorteilhafter Weiterbildung der Erfindung kann der Zylinder zwischen den Kolben zumindest einen radial nach innen vorspringenden Anschlag besitzen, der die Stellwege der Kolben begrenzt und voneinander trennt. Der genannte Anschlag ist hierbei vorteilhafterweise derart ausgebildet, dass die Kolbenstange mit ihrem freien Ende und/oder mit ihrem den einen Kolben sichernden Anschlag an dem genannten nach innen vorspringenden Anschlag des Zylinders vorbeifahrbar ist, so dass die Unterteilung des Zylinders bzw. die Begrenzung der Stellwege der Kolben im Zylinder die Verfahrbarkeit der Kolbenstange nicht behindert.

In vorteilhafter Weiterbildung der Erfindung können die mehreren Kolben in dem gemeinsamen Zylinder auf voneinander abgewandten Seiten der Kolben mit Druck beaufschlagt werden, insbesondere derart, dass die Kolbenstange in einer Zwischenlage relativ zu dem Zylinder von den beiden Kolben festgehalten bzw. eingeklemmt werden kann. Die genannte Zwischenlage meint dabei eine Stellung der Kolbenstange, die zwischen der maximal eingefahrenen und der maximal ausgefahrenen Stellung der genannten Kolbenstange relativ zum Zylinder liegt. Hierdurch können mit nur einem Zylinder und den darin aufgenommenen beiden verschieblichen Kolben drei unterschiedliche Stellungen der Stellzylindereinheit erzielt werden, die durch die maximal eingefahrene Stellung der Kolbenstange, die maximal ausgefahrene Stellung der Kolbenstange und die besagte Zwischenlage der Kolbenstange definiert sind.

Um eine einfache hydraulische Ansteuerung besagter Zwischenstellung zu erlauben, können die auf den voneinander abgewandten Seiten der Kolben vorgesehenen Druckkammern in Weiterbildung der Erfindung von einer gemeinsamen Druckleitung her parallel geschaltet mit Druck beaufschlagt werden.

Über den genannten Zylinder, in dem mehrere Kolben zur Kolbenstange jeweils verschiebbar aufgenommen sind, umfasst die Stellzylindereinheit zumindest noch einen weiteren Zylinder, der in Weiterbildung der Erfindung in an sich herkömmlicher Weise als doppelt wirkender Zylinder ausgebildet sein kann. Insbesondere kann in Weiterbildung der Erfindung in dem anderen Zylinder ein Kolben aufgenommen sein, der mit der Kolbenstange axial fest verbunden sein kann. Der Zylinder kann hierbei in Weiterbildung der Erfindung zwei auf gegenüberliegenden Seiten des genannten Kolbens liegende Druckkammern besitzen, so dass durch Beaufschlagung der gegenüberliegenden Druckkammern die Kolbenstange eingefahren und ausgefahren werden kann. Je nach zu verrichtender Hubaufgabe kann jedoch auch eine nur einfach wirkende Zylinderausbildung vorgesehen werden, beispielsweise dann, wenn sichergestellt ist, dass während des durch den Zylinder zu verrichtenden Stellwegs stets eine ausreichende Zugkraft, oder auch Druckkraft, auf den Zylinder wirkt, beispielsweise infolge der Gewichtskraft des zu verstellenden Arbeitsaggregats. Eine doppelt wirkende Ausbildung ist jedoch bevorzugt, um Stellbewegungen in beiden Richtungen aktiv vornehmen zu können.

In Weiterbildung der Erfindung kann die Stellzylindereinheit zwei Zylinder besitzen, die auf einer gemeinsamen Kolbenstange sitzen, wobei die genannte Kolbenstange durch voneinander unabhängige Stellbewegungen einerseits relativ zu dem einen Zylinder ein- und/oder ausfahrbar ist und andererseits relativ zu dem anderen Zylinder ein- und/oder ausfahrbar ist.

Alternativ zu einer solchen Ausbildung der Stellzylindereinheit könnten auch zwei Zylinder sozusagen Rücken an Rücken miteinander verbunden sein, wobei zwei Kolbenstangen vorgesehen sein können, die jeweils einzeln einem der beiden Zylinder zugeordnet sind.

Durch die spezielle Ausbildung der Stellzylindereinheit können verschiedene Phasen der Hubschwenkbewegung des Arbeitsaggregats ohne aufwändige Hydrauliksteuermittel durchfahren bzw. gesteuert werden. In Weiterbildung der Erfindung kann einer der beiden Zylinder einen Stellweg zwischen Vorgewendestellung und Transportstellung bewirken, während der andere Zylinder einerseits einen Stellweg zwischen Arbeitsstellung und Vorgewendestellung und andererseits einen Stellweg unmittelbar in bzw. aus der Transportstellung vorsieht. Der Stellweg in die Transportstellung kann also aufgeteilt werden bzw. unterteilt werden insbesondere derart, dass ein Absenken bzw. Ausheben in die bzw. aus der Transportstellung durch einen anderen Kolben gesteuert wird als der restliche Stellweg zwischen Transportstellung und Vorgewendestellung.

Ein solches mehrstufiges bzw. unterteiltes Verfahren in die Transportstellung kann insbesondere dann vorteilhaft sein, wenn die Arbeitsaggregate bzw. der die Arbeitsaggregate tragende Tragrahmen in der Transportstellung auf einer Abstützfläche bzw. in einer Abstützmulde abgestützt werden, beispielsweise um Stöße und Vibrationen von Bodenwellen her abzufangen und übermäßige Belastungen der Hubschwenkvorrichtung zu verhindern.

Alternativ oder zusätzlich kann eine stufenweise bzw. unterteilte Verfahrbarkeit in die Transportstellung auch dann vorteilhaft sein, wenn bei oder nach Erreichen der Transportstellung ein weiteres Zusatzaggregat betätigt bzw. verfahren werden soll, insbesondere durch das in die Transportstellung fahrende Arbeitsaggregat bzw. den das Arbeitsaggregat tragenden Tragrahmen selbst, d.h. wenn das Arbeitsaggregat bzw. der Tragrahmen sozusagen als Stellaktor für das genannte Zusatzaggregat wirken soll. Derartige Zusatzaggregate können verschiedener Natur sein, insbesondere kann eine Schutzbarriere vor das Arbeitsaggregat gefahren werden, wenn das Arbeitsaggregat seine Transportstellung erreicht hat, um Kollisionen mit dem Arbeitsaggregat zu verhindern.

In Weiterbildung der Erfindung können die Arbeitsaggregate in der Transportstellung durch ein vorgeblendetes Schutzelement abgesichert und das Schutzelement wegbewegbar gelagert werden, um die Bewegung der Arbeitsaggregate in die und aus der Transportstellung nicht zu behindern und die herkömmliche Kinematik zum Verbringen in die Transportstellung beibehalten zu können. Durch die Wegbewegbarkeit des Kollisionsschutzes kann dieser zudem in der optimalen Position vor den Arbeitsaggregaten ohne Rücksicht auf mögliche Kollisionen hiermit angeordnet werden. Dabei kann an dem Fahrrahmen eine Schutzbarriere beweglich gelagert sein, die zwischen einer Schutzstellung, in der die Schutzbarriere quer zur Fahrtrichtung betrachtet vor den in Transportstellung befindlichen Arbeitsaggregaten angeordnet ist, und einer Inaktivstellung, in der die in Transportstellung befindlichen Arbeitsaggregate quer zur Fahrtrichtung frei liegen, bewegbar ist. Die Schutzbarriere erstreckt sich in ihrer Schutzstellung derart vor den Arbeitswerkzeugen der Arbeitsaggregate, dass in Fahrtrichtung betrachtet keine Personen von der Seite her in die Arbeitswerkzeuge laufen können und die Arbeitswerkzeuge auch nicht an anderen Hindernissen wie Bäumen oder Gebäudekanten hängenbleiben können, da die Schutzbarriere dies nach Art einer Leitplanke oder eines Stoßfängers verhindert. In der Inaktivstellung hingegen liegen die in Transportstellung befindlichen Arbeitsaggregate quer zur Fahrtrichtung frei, so dass die Arbeitsaggregate aus der Transportstellung quer zur Fahrtrichtung nach außen weggeklappt werden können. Die Schutzbarriere befindet sich außerhalb der Schwenk- oder Bewegungsbahn der Arbeitsaggregate aus der Transportstellung in die Vorgewende- oder Arbeitsstellung und umgekehrt.

In vorteilhafter Weiterbildung der Erfindung ist zur Verstellung der Schutzbarriere ein mechanischer Betätiger vorgesehen, der mit der Schutzbarriere gekoppelt ist und durch ein Heuwerbungsaggregatsteil und/oder ein Tragrahmenteil in Eingriff bringbar ist, wenn die Heuwerbungsaggregate auf ihre Transportstellung zu bewegt werden bzw. in diese gelangen. Der genannte Betätiger kann hierbei nach Art eines Anschlags wirken, gegen den das Heuwerbungsaggregatsteil bzw. Tragrahmenteil fährt, um den Betätiger dann zu verschieben und dann hierdurch die Bewegung der Schutzbarriere zu erzeugen. In diesem Fall bilden sozusagen die Heuwerbungsaggregate selbst den Aktor, um die Schutzbarriere in die Schutzstellung zu verbringen.

Insbesondere kann der genannte mechanische Betätiger einen Schwenkhebel umfassen, der durch eine Vertikalbewegung und/oder eine Querbewegung der Heuwerbungsaggregate verschwenkbar ist und die Bewegung der Schutzbarriere erzeugt. In vorteilhafter Weiterbildung der Erfindung kann der genannte Schwenkhebel um eine liegende, etwa in Fahrtrichtung weisende Achse schwenkbar gelagert sein, wodurch sich insbesondere bei ebenfalls schwenkbarer Lagerung der Schutzbarriere eine einfache Antriebskinematik ergibt.

In Weiterbildung der Erfindung kann der genannte mechanische Betätiger zusammen mit der Schutzbarriere eine Wippe bilden, die ein Niederdrücken des Betätigers in ein Anheben der Schutzbarriere umsetzt und/oder umgekehrt ein Niederdrücken der Schutzbarriere in ein Anheben des Betätigers umsetzt.

In Weiterbildung der Erfindung kann am Fahrrahmen eine Abstützfläche vorgesehen sein, auf die die Arbeitsaggregate in der Transportstellung abgesetzt werden können. Eine solche Abstützfläche kann am Tragrahmen vorgesehen bzw. hiermit verbunden sein, um die Arbeitsaggregate in der Transportstellung abzustützen und beispielsweise gegen Vibrationen und Stöße von Bodenwellen abzufangen. Vorteilhafterweise kann die genannte Abstützfläche als Absetzmulde ausgebildet sein, um einen in der Transportstellung unten liegenden Abschnitt der Arbeitsaggregate abzufangen und in vertikaler Richtung und ggf. auch quer hierzu abzufangen. Insbesondere kann die genannte Absetzmulde einem Schutzbügel der Heuwerbungsaggregate zugeordnet sein, der sich üblicherweise in Arbeitsstellung der Arbeitsaggregate vor den genannten Arbeitsaggregaten erstreckt. Das Herausheben des Arbeitsaggregats bzw. des Tragrahmens aus der genannten Absetzmulde kann vorteilhafterweise durch einen der beiden in demselben Zylinder vorgesehenen Kolben erfolgen, insbesondere durch den von der Kolbenstange lösbaren Kolben, welcher die genannte Kolbenstange ein Stück weit ausfahren kann.

Um die Arbeitsaggregate aus der Arbeitsstellung, in der sich die Heuwerbungsaggregate vorteilhafterweise quer zur Fahrtrichtung versetzt insbesondere nebeneinander angeordnet erstrecken können, in die Transportstellung entlang des Fahrrahmens verbringen zu können, kann der Tragrahmen in vorteilhafter Weiterbildung der Erfindung um zumindest eine liegende Querachse schwenkbar an dem Fahrrahmen angelenkt sein und abklappbare Seitenteile umfassen, die an einem Mitteilteil des Tragrahmens, der in der genannten Weise um die liegende Querachse schwenkbar ist, angelenkt sind derart, dass die genannten Seitenteile in der abgesenkten Arbeitsstellung um liegende, in Fahrtrichtung weisende Achsen scharnieren und in der ausgehobenen Transportstellung zusammen mit den daran gelagerten Arbeitsaggregaten nach vorne an den Fahrrahmen anklappbar sind. Bei einer solchen zweiachsigen bzw. mehrgelenkigen Aufhängung des Tragrahmens können die Arbeitsaggregate insbesondere dadurch in die Transportstellung verbracht werden, dass zunächst der Tragrahmen insgesamt um die genannte liegende Querachse nach oben verschwenkt wird, bis sich die genannte Scharnierachse der Seitenteile nicht mehr liegend, sondern aufrecht erstreckt, so dass die Seitenteile dann um die aufrecht stehenden Scharnierachsen nach vorne an den Fahrrahmen angeklappt werden können.

Um bei einer solchen Kinematik die Schutzbarriere mechanisch betätigen und in die Schutzstellung verbringen zu können, kann der genannte mechanische Betätiger derart angeordnet und ausgebildet sein, dass die Heuwerbungsaggregate und/oder der Tragrahmen beim Nach-vorne-Klappen an den Fahrrahmen gegen den Betätiger drücken. Alternativ oder zusätzlich können die Arbeitsaggregate in der nach vorne angeklappten Stellung noch ein Stück weit abgesenkt werden, um den mechanischen Betätiger nach unten zu drücken und hierdurch die Schutzbarriere nach oben zu fahren. Dieses Absenken bzw. das umgekehrte Ausheben, welches die Schutzbarriere wieder nach unten fahren lässt, kann in vorteilhafter Weise durch einen der beiden in dem gemeinsamen Zylinder vorgesehenen Kolben bewirkt werden, insbesondere den von der Kolbenstange lösbaren Kolben, der die Kolbenstange ein Stück weit ausfahren und hierdurch das Arbeitsaggregat ein Stück weit anheben kann.

Die Anlenkung des Tragrahmens muss hierbei aber nicht in der genannten Weise um nur eine liegende Querachse schwenkbar ausgebildet sein. Beispielsweise um ein Einstechen der Arbeitswerkzeuge beim anfänglichen Ausheben in die Vorgewendestellung zu verhindern, können auch mehrachsige Anlenkungen bzw. mehrteilige Ausbildungen des Tragrahmens bzw. des genannten Mittelteils vorgesehen sein. Beispielsweise kann der genannte Tragrahmen nicht direkt am Fahrrahmen angelenkt sein, wobei vorteilhafterweise zwischen Fahrrahmen und Tragrahmen eine mehrfache Gelenkigkeit vorgesehen sein kann. Beispielsweise kann zwischen dem Fahrrahmen und dem die Bearbeitungsaggregate tragenden Tragrahmen ein Zwischenrahmen vorgesehen sein, der einerseits um eine erste liegende Querachse schwenkbar am Fahrrahmen angelenkt ist und andererseits um eine zweite liegende Querachse schwenkbar mit dem Tragrahmen verbunden ist. Die Hubschwenkvorrichtung zum Ausheben des Tragrahmens kann dabei derart ausgebildet sein, dass der Tragrahmen und der Zwischenrahmen einerseits relativ zueinander schwenkbar sind, um die Winkellage der Bearbeitungsaggregate relativ zum Boden zu verändern, und andererseits gemeinsam relativ zum Fahrrahmen schwenkbar sind, um in die Vorgewende- bzw. Transportstellung verbracht zu werden.

Die vorliegende Erfindung wird nachfolgend anhand eines bevorzugten Ausführungsbeispiels und zugehöriger Zeichnungen näher erläutert. In den Zeichnungen zeigen:
- Fig. 1:: eine perspektivische Ansicht einer Heuwerbungsmaschine in Form eines Zetters nach einer vorteilhaften Ausführung der Erfindung, wobei die Heuwerbungsaggregate in Form von Rechkreiseln in ihrer abgesenkten Arbeitsstellung gezeigt sind,
- Fig. 2:: eine schematische Seitenansicht der Heuwerbungsmaschine aus Fig. 1, wobei die Heuwerbungsaggregate in ihrer ausgehobenen Transportstellung und die Schutzbarriere in der Schutzstellung vor den ausgehobenen Heuwerbungsaggregaten gezeigt ist,
- Fig. 3 :: eine Seitenansicht der Heuwerbungsmaschine aus den vorhergehenden Figuren, wobei die Heuwerbungsaggregate in der abgesenkten Arbeitsstellung gezeigt sind,
- Fig. 4:: eine Seitenansicht der Heuwerbungsmaschine ähnlich Fig. 3, wobei die Arbeitsaggregate in der Vorgewendestellung gezeigt sind,
- Fig. 5 :: eine perspektivische, ausschnittsweise Darstellung der rechts und links vorgesehenen Schutzbarrieren zur Absicherung der Heuwerbungsaggregate in der Transportstellung,
- Fig. 6:: eine Heckansicht der Heuwerbungsmaschine mit in die Transportstellung gebrachten Heuwerbungsaggregaten, wobei die Schutzbarriere in ihre Schutzstellung gefahren ist,
- Fig. 7:: eine Heckansicht der Heuwerbungsmaschine ähnlich Fig. 6, wobei die Arbeitsaggregate in der Arbeitsstellung und die Schutzbarriere 22 in der abgesenkten Inaktivstellung gezeigt sind, und
- Fig. 8:: einen Längsschnitt durch die Stellzylindereinheit zur Verstellung des Tragrahmens, wobei die Stellzylindereinheit in der gänzlich eingefahrenen Stellung entsprechend der Transportstellung des Arbeitsaggregats gezeigt ist.

Die Heuwerbungsmaschine 1 umfasst vorteilhafterweise einen länglichen Fahrrahmen 2, der mit seinem vorderen Ende durch eine an sich übliche Anbauvorrichtung 3 an einem nicht gezeigten Schlepper angebaut werden kann und durch ein Fahrwerk 4, das vorteilhafterweise an einem heckseitigen Abschnitt des Fahrrahmens 2 angeordnet sein kann, am Boden abgestützt ist. Die genannte Anbauvorrichtung 3 kann hierbei verschieden ausgebildet sein und vorteilhafterweise eine Verschwenkung des Fahrrahmens 2 gegenüber dem Schlepper um eine aufrechte Achse zulassen, so dass der Fahrrahmen 2 nach Art eines Trailers dem Schlepper hinterherlaufen kann.

An dem genannten Fahrrahmen 2 sind in noch näher zu erläuternder Weise als Heuwerbungsaggregate eine Mehrzahl von Rechkreiseln 5 angelenkt, die in der Arbeitsstellung um näherungsweise aufrechte Kreiselachsen 6 rotatorisch antreibbar sind und umlaufende Rechzinken umfassen, mittels derer auf dem Boden liegendes Erntegut wie beispielsweise Gras oder Heu zusammengerecht, geschwadet, gezettet oder in anderer Weise bearbeitet werden kann. Der Antrieb zum rotatorischen Antreiben der Rechkreisel 5 kann verschieden ausgebildet sein, beispielsweise eine Gelenkwelle, ggf. mit Verteilergetriebe umfassen, um die Rechkreisel 5 von einer Zapfwelle des Schleppers her anzutreiben.

Die genannten Rechkreisel 5 sind hierbei an einem Tragrahmen 7 aufgehängt, der gegenüber dem Fahrrahmen 2 aushebbar und verschwenkbar ist. Die Rechkreisel 5 sind hierbei vorteilhafterweise durch Stützräder 8 bzw. Tasträder am Boden abgestützt, wobei in der gezeichneten Ausführung unter jedem Rechkreisel 5 ein solches Stützrad 8 vorgesehen ist.

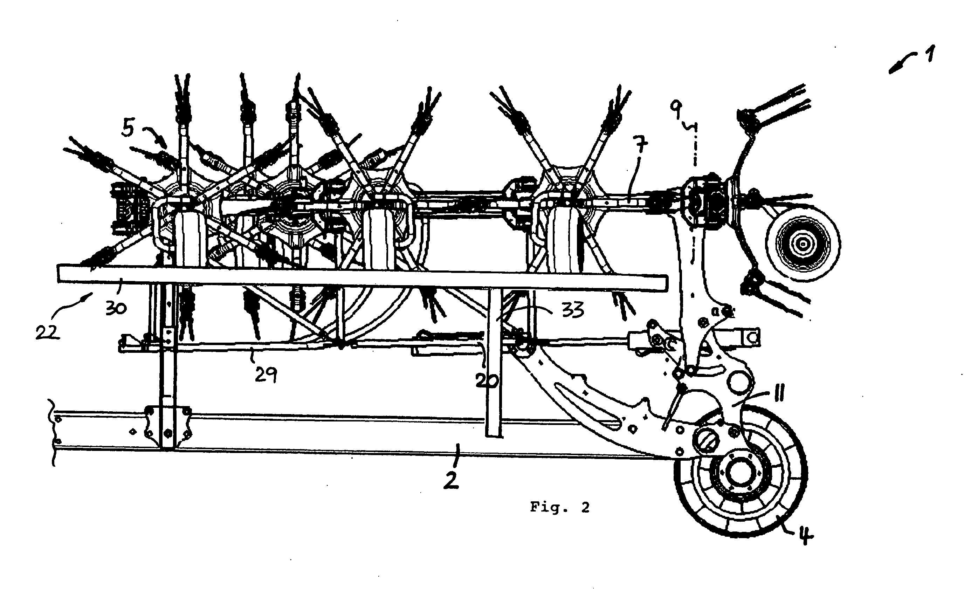

Die in Arbeitsstellung seitlich auskragenden Seitenteile des Tragrahmens 7 sind vorteilhafterweise in mehrere Tragrahmenteile unterteilt, die relativ zueinander um Scharnierachsen scharnieren können, die in der Arbeitsstellung liegend in Fahrtrichtung weisen, um eine entsprechende Bodenanpassung über die Breite des Geräts zuzulassen. Durch die in Fig. 2 gezeigte Scharnierachse 9 kann hierbei in der ausgehobenen Stellung der gesamte Seitenteil des Tragrahmens 7 mit den daran angelenkten Rechkreiseln 5 nach vorne verschwenkt werden, so dass sich die Seitenteile des Tragrahmens mit den daran angelenkten Rechkreiseln 5 näherungsweise parallel zum Fahrrahmen 2 entlang dem Fahrrahmen nach vorne erstrecken, vgl. Fig. 2, um die Arbeitsbreite entsprechend zu verkleinern.

Ein zentraler Mittelteil des genannten Tragrahmens 7 umfasst hierbei einen die Rechkreisel 5 übergreifenden und in der Arbeitsstellung nach vorne zum Fahrrahmen 2 hin weisenden Anlenkteil 10, der der Anlenkung des Tragrahmens 7 am Fahrrahmen 2 dient.

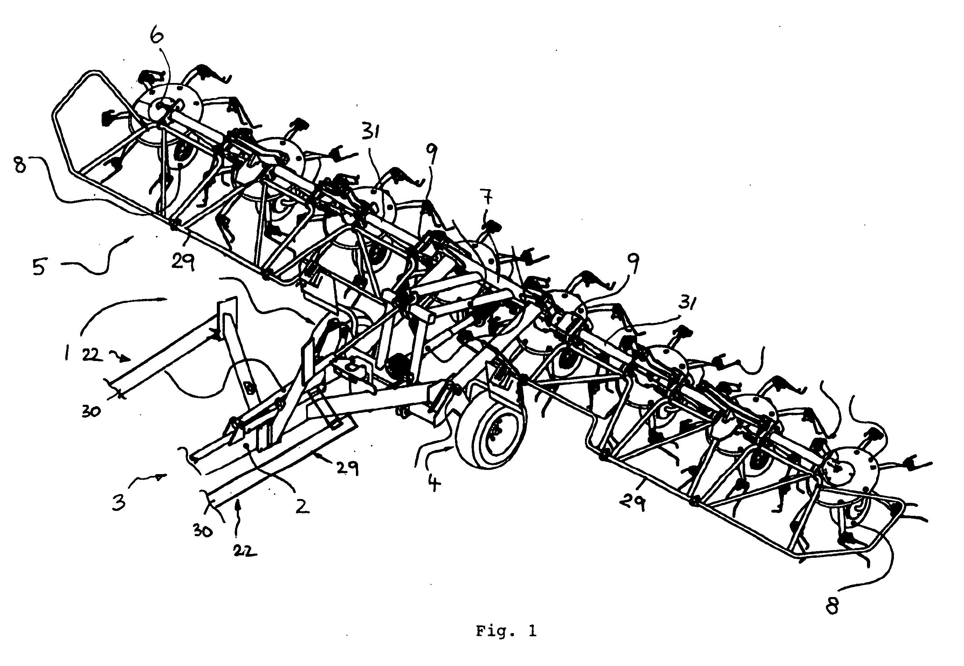

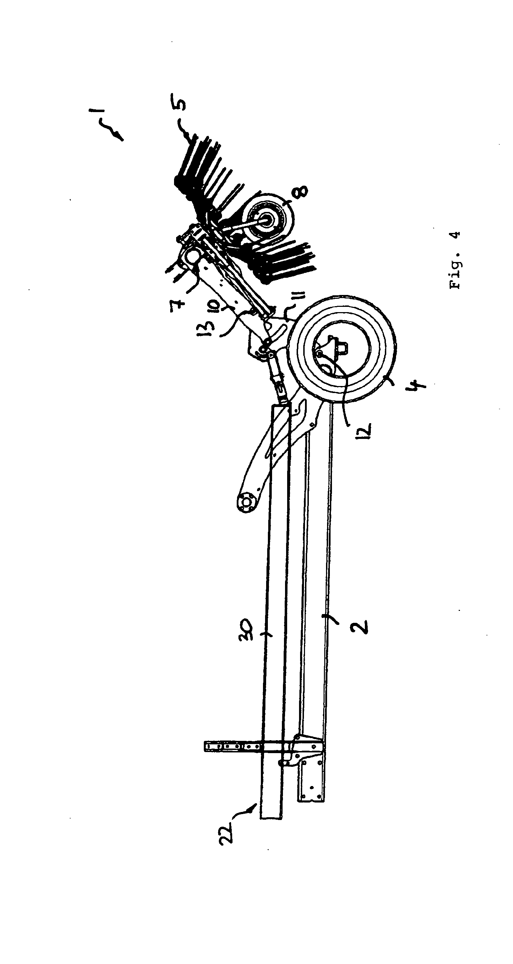

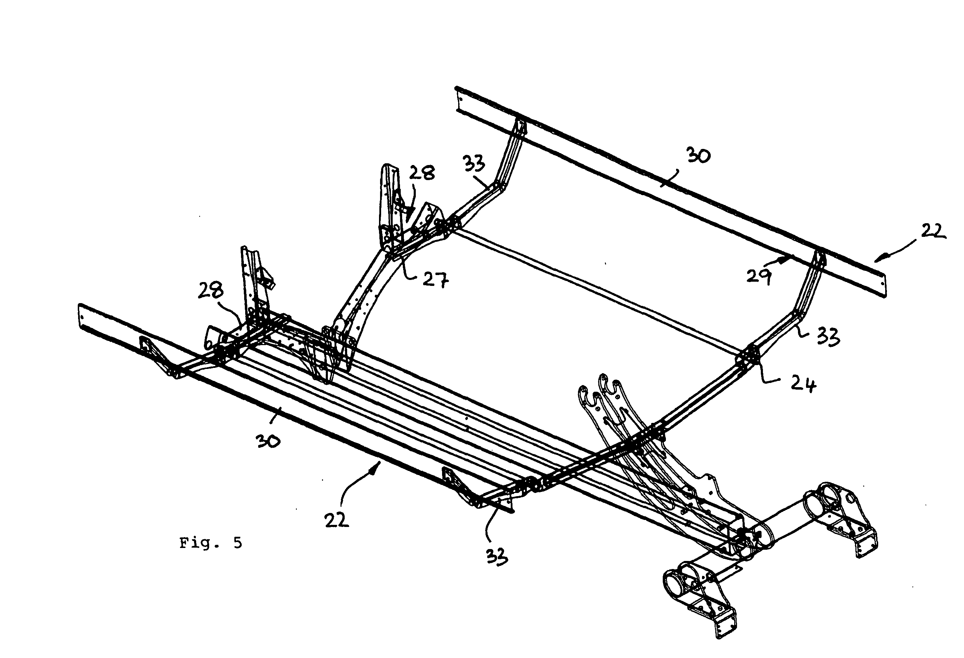

Genauer gesagt ist der genannte Anlenkteil 10 des Tragrahmens 7 an einem Zwischenrahmen 11 angelenkt, der sich zwischen dem Fahrrahmen 2 und dem Tragrahmen 7 erstreckt. Wie ein Vergleich der Figuren 1 bis 3 zeigt, ist der genannte Zwischenrahmen 11 einerseits um eine erste liegende Querachse 12 schwenkbar an dem Fahrrahmen 2 angelenkt, wobei sich die genannte erste Querachse 12 im Bereich des Fahrwerks 4, vorzugsweise unmittelbar über dem Fahrwerk 4, erstreckt, so dass die beim Ausheben in den Fahrrahmen 2 eingeleitete Gewichtskraft der Rechkreisel 5 unmittelbar über das Fahrwerk 4 abgeleitet werden kann. Andererseits ist der genannte Zwischenrahmen 11 um eine zweite liegende Querachse 13 gelenkig bzw. knickbar mit dem Anlenkteil 10 des Tragrahmens 7 verbunden, so dass der Zwischenrahmen 11 und der Tragrahmen 7 zueinander abgeknickt werden können, wie dies ein Vergleich der Figuren 4 und 5 zeigt.

Weiterhin umfasst die Hub-/Schwenkvorrichtung 19 zum Ausheben des Tragrahmens 7 und der daran angelenkten Rechkreisel 5 in eine Vorgewende- bzw. Transportstellung einen Stellaktor 20 zwischen dem Fahrrahmen 2 und dem Zwischenrahmen 11, um den Zwischenrahmen 11 gegenüber dem Fahrrahmen 2 verschwenken und ausheben zu können. Der genannte Stellaktor 20 kann beispielsweise ein Hydraulikzylinder sein, der einerseits am Fahrrahmen 2 bzw. einer damit verbundenen Konsole und andererseits an dem Zwischenrahmen 11 bzw. einer daran befestigten Konsole angelenkt ist, und zwar jeweils von der ersten Querachse 12 beabstandet, um einen entsprechenden Hebel zu haben.

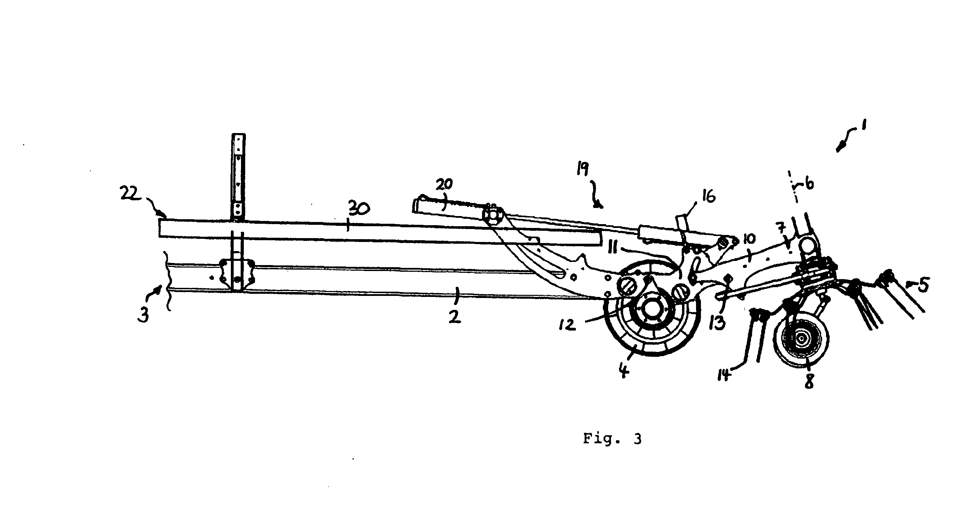

Um die Heuwerbungsaggregate 5 aus der in den Figuren 1 und 3 gezeigten Arbeitsstellung auszuheben, wird zunächst der genannte Stellaktor 20 betätigt, um den gesamten Tragrahmen 7 um die genannten liegenden Querachsen 12 und 13 nach oben zu schwenken, wobei - je nach Arbeitssituation - in der in Fig. 3 gezeigten Vorgewendestellung angehalten werden kann. Sollen indes die Heuwerbungsaggregate 5 in die Transportstellung gemäß Fig. 2 verbracht werden, wird über die genannte Hubschwenkvorrichtung 19 der Tragrahmen 7 über die in Fig. 4 gezeigte Vorgewendestellung hinaus nach oben geschwenkt, bis die zuvor genannten Scharnierachsen 9 näherungsweise aufrecht stehen.

Sodann werden die Seitenteile 31 des Tragrahmens 7, vorzugsweise mittels zwischen den Seitenteilen 31 und dem Mittelteil des Tragrahmens 7 vorgesehener Stellaktoren beispielsweise in Form von Druckmittelzylindern, um die genannten Scharnierachsen 9, die nun aufrecht stehen, nach vorne geklappt, bis die Heuwerbungsaggregate 5 näherungsweise an den Fahrrahmen 2 angeklappt sind bzw. sich entlang dessen hintereinander erstrecken. In dieser in Fig. 2 gezeigten Transportstellung erstrecken sich die Rechkreiselachsen im Wesentlichen liegend quer zur Fahrtrichtung, wobei die Arbeitswerkzeuge bzw. Rechzinken jeweils nach außen weisen, wie dies Fig. 2 zeigt.

Um hier eine Verletzungsgefahr zu vermeiden, sind rechts und links vom Fahrrahmen 2 zwei Schutzbarrieren 22 vorgesehen, die jeweils im Wesentlichen einen U-förmigen Schutzbügel 29 aufweisen, wobei jeder der genannten Schutzbügel 29 einen Barriereschenkel 30 aufweist, der sich näherungsweise parallel zum Fahrrahmen 2 erstreckt und ausreichend lang ausgebildet ist, um die parallel am Fahrrahmen 2 angeklappten Heuwerbungsaggregate seitlich abzudecken. Der genannte Barriereschenkel 30 kann ein Balken, ein Rohr oder auch ein Blech in Form eines Schilds oder dergleichen sein, wobei vorteilhafterweise eine längsträgerartige Ausbildung vorgesehen sein kann, wie diese die Figuren zeigen.

Der Barriereschenkel 30 ist über Lagerschenkel 33, die sich quer zur Fahrtrichtung erstrecken können, am Fahrrahmen 2 und/oder damit verbundenen Haltekonsolen befestigt wobei eine schwenkbare Lagerung um liegende Schwenkachsen 24 vorgesehen sein kann, wie dies die Fig. 5 verdeutlicht. Vorteilhafterweise erstreckt sich die genannte Schwenkachse 24 für den Schutzbügel 29 von der Längsmittelebene 25 der Heuwerbungsmaschine 1 quer beabstandet im Wesentlichen fahrtrichtungsparallel, so dass die quer auskragenden Schutzbügel 29 auf und ab geschwenkt werden können. Die genannte Schwenkachse 24 kann hierbei im Wesentlichen unter den Heuwerbungsaggregaten 5 angeordnet sein, wenn diese in Transportstellung sind, wobei sich die genannte Schwenkachse 24 insbesondere etwa unter den Rechkreiseltragarmen der Rechkreisel erstrecken kann.

Um die genannten Schutzbügel 29 auf und ab schwenken zu können, sind mechanische Betätiger 27 an den Lagerschenkeln 33 befestigt und mit diesen zu einer Wippe verbunden, die um die jeweilige Schwenkachse 24 verschwenken kann.

Wie Fig. 5 zeigt, können die genannten mechanischen Betätiger 27 im Bereich von Abstützflächen 28 vorgesehen sein, auf denen die Heuwerbungsaggregate 5 in der Transportstellung abgesetzt werden können. Die genannten Abstützflächen 28 können an einer Stützkonsole vorgesehen sein, die vom Fahrrahmen 2 quer schräg nach oben auskragen können und an ihren Enden eine Aufnahmemulde bilden, in die die Heuwerbungsaggregate vorzugsweise mit ihren Schutzbügeln 34 abgesetzt werden können.

Die Anordnung und Ausbildung der genannten mechanischen Betätiger 27 ist dabei derart getroffen, dass in der abgesenkten Ausgangsstellung der Schutzbarriere 22 die Betätiger 27 über die Abstützfläche 28 nach oben vorspringen, so dass beim Absetzen der Heuwerbungsaggregate 5 der mechanische Betätiger 27 mit den Heuwerbungsaggregaten 5 in Eingriff gelangt und von diesen niedergedrückt werden kann. Durch die genannte wippenartige Ausbildung führt das Niederdrücken der mechanischen Betätiger 27 zu einem Nach-oben-Fahren der Schutzbarriere 22 durch Verschwenken um die genannte Schwenkachse 24.

Vorteilhafterweise kann das vollständige Anfahren der Transportstellung nochmals ein Absenken der Seitenteile 31 des Tragrahmens 7 umfassen. Sind die genannten Seitenteile 31 vollständig nach vorne eingeklappt, kann über die Hubschwenkvorrichtung 19 der Tragrahmen 7 nochmals ein Stück weit nach vorne gekippt werden, wodurch die nach vorne auskragenden Seitenteile 31 des Tragrahmens 7 ein Stück weit abgesenkt werden und gegen die genannten Betätiger 27 drücken bzw. diese niederdrücken, bis die Abstützflächen 28 vollständig erreicht sind.

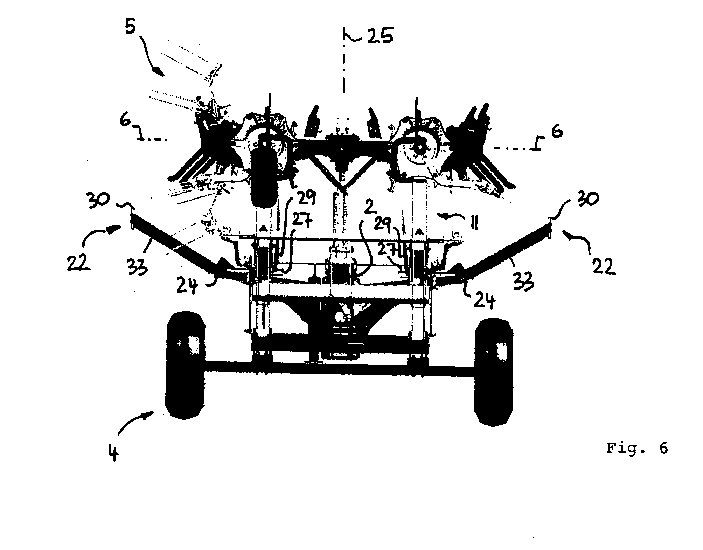

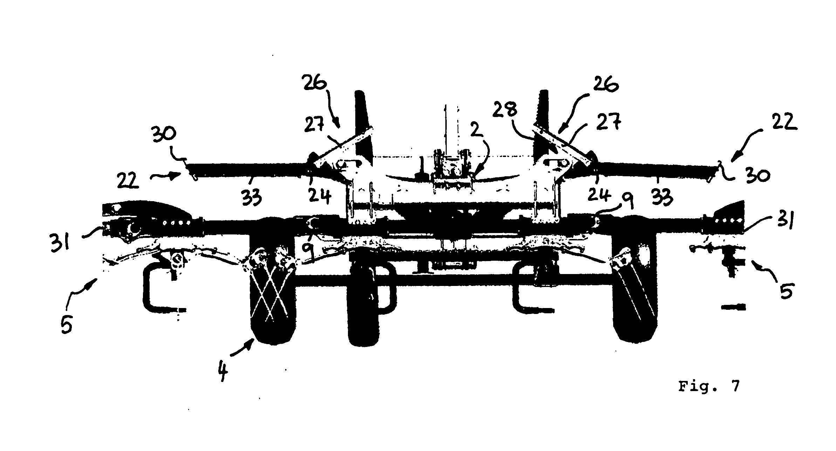

Wie ein Vergleich der Figuren 6 und 7 zeigt, kann die Anordnung derart getroffen sein, dass sich die Schutzbarrieren 22 mit ihren Lagerschenkeln 33 in der abgesenkten Ausgangsstellung etwa liegend von den Abstützflächen 28 bzw. geringfügig darunterliegend nach außen erstrecken können. Insbesondere kann in der abgesenkten Ausgangsstellung die Schutzbarriere 22 vollständig unter dem von den Seitenteilen 31 und den daran befestigten Heuwerbungsaggregaten 5 überstrichenen Verschwenkweg liegen, so dass die Heuwerbungsaggregate 5 ohne Kollision mit den Schutzbarrieren 22 nach vorne an den Fahrrahmen 2 angeklappt und an die Abstützflächen 28 gefahren werden können. Durch das genannte Absenken der Seitenteile 31 in der vorne angeklappten Stellung, werden dann die mechanischen Betätiger 27 niedergedrückt, wodurch die Lagerschenkel 33 und damit der gesamte Schutzbügel 29 der Schutzbarrieren 22 jeweils nach oben geschwenkt werden, wobei hier vorteilhafterweise die genannten Lagerschenkel 33 in eine von den Schwenkachsen 24 schräg nach oben außen verlaufende Stellung, vorzugsweise unter einem Neigungswinkel zur Horizontalen von etwa 30° bis 60°, insbesondere etwa 30° bis 45°, gebracht werden können, wie dies Fig. 6 zeigt. Vorteilhafterweise wird der Schwenkvorgang derart bemessen, dass sich die Schutzbarrieren 22 mit ihren Barriereschenkeln 30 in Höhe der Rechkreisel 5 rechts und links außerhalb der Rechkreiselzinken erstrecken, um ein Hineinlaufen in die Rechzinken zu verhindern, vgl. Fig. 6.

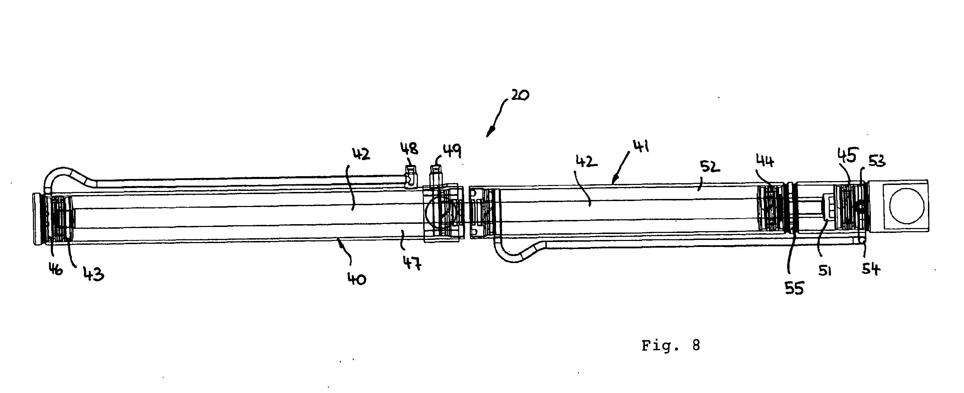

Um die genannten Hubschwenkbewegungen zwischen Arbeitsstellung, Vorgewendestellung und Transportstellung ausführen zu können, kann der genannte Stellaktor 20 die in Fig. 8 gezeigte Ausbildung besitzen. Insbesondere kann in Weiterbildung der Erfindung der Stellaktor als Stellzylindereinheit mit mehreren Zylindern und Kolben ausgebildet sein, wobei vorteilhafterweise zwei voneinander separat ausgebildete Zylinder 40 und 41 auf einer gemeinsamen Kolbenstange 42 sitzen können, so dass die Zylinder 40 und 41 jeweils unabhängig voneinander relativ zur Kolbenstange 42 verfahren können.

Der eine Zylinder 40 kann hierbei in an sich herkömmlicher Weise als doppelt wirkender Zylinder ausgebildet sein und einen Kolben 43 aufnehmen, der mit der Kolbenstange 42, insbesondere an deren Ende, axial fest verbunden ist. Der Kolben 43 unterteilt den Zylinder 40 hierbei in zwei auf gegenüberliegenden Seiten des Kolbens 43 angeordnete Druckkammern 46 und 47, die über Druckanschlüsse 48 und 49 jeweils mit Druck beaufschlagbar sind, um ein Einfahren bzw. Ausfahren der Kolbenstange 42 relativ zum Zylinder 40 bewirken zu können.

Der andere Zylinder 41 nimmt zwei Kolben 44 und 45 jeweils verschieblich auf, wobei die beiden Kolben 44 und 45 auch zur Kolbenstange 42 jeweils verschieblich angeordnet sind.

Wie Fig. 8 zeigt, sitzt einer der beiden genannten Kolben 44 auf der Kolbenstange 42 und ist relativ zu dieser verschieblich. Die Kolbenstange 42 besitzt an ihrem freien Ende 50, das sich im Inneren des Zylinders 41 zwischen den beiden Kolben 44 und 45 befindet, einen Endanschlag 51 in Form einer Verdickung, die den genannten Kolben 44 gegen Herunterrutschen von der Kolbenstange 42 sichert. Der genannte Endanschlag 51 kann beispielsweise in Form eines in die Kolbenstange 42 axial eingeschraubten Endbolzens bestehen, dessen Kopf einen größeren Durchmesser als die Kolbenstange 42 besitzt, vgl. Fig. 8.

Der andere Kolben 45, der in dem genannten Zylinder 41 aufgenommen ist, steht stirnseitig an dem freien Ende 50 der Kolbenstange 42 an, ohne jedoch hiermit fest verbunden zu sein, d.h. die Kolbenstange 42 kann von dem Kolben 45 gelöst werden und sich - gemäß Fig. 8 - nach links von dem Kolben 45 wegbewegen. Der genannte Kolben 45 ist dazu vorgesehen, stirnseitig gegen die Kolbenstange 42 zu drücken, um diese ein Stück weit aus dem Zylinder 41 ausfahren zu können. Umgekehrt ist der Kolben 44 dazu vorgesehen, die Kolbenstange 42 in den Zylinder 41 einzufahren.

Wie Fig. 8 verdeutlicht, können in dem Zylinder 41 auf voneinander abgewandten Seiten der beiden Kolben 44 und 45 Druckkammern 52 und 53 vorgesehen sein, um die beiden Kolben 44 und 45 in einander entgegenlaufenden Richtungen beaufschlagen zu können.

In vorteilhafter Weiterbildung der Erfindung können die genannten Druckkammern 52 und 53 hierbei von einem gemeinsamen Druckanschluss 54 her in parallel geschalteter Weise beaufschlagt werden, um die Kolben 44 und 45 gegeneinander zu fahren und hierdurch die Kolbenstange 42 über den genannten Endanschlag 51 in einer Zwischenstellung einzuspannen.

Der Zylinder 41 kann zwischen den beiden Kolben 44 und 45 einen nach innen vorspringenden Endanschlag 55, beispielsweise in Form einer Einschnürung des Zylinders 41, umfassen, welcher Endanschlag 55 die Stellwege der Kolben 44 und 45 in dem Zylinder 41 begrenzt und voneinander trennt. Der genannte Endanschlag 55 ist hierbei vorteilhafterweise aber derart ausgebildet, dass die Kolbenstange 42 sich trotz ihres verdickten Endabschnitts, d.h. trotz des Endanschlags 51 an dem genannten zylinderseitigen Endanschlag 55 vorbei bewegen kann, um vollends ausgefahren zu werden.

Hierdurch ergeben sich folgende Funktionsmöglichkeiten: Um den gesamten Tragrahmen 7 mit den daran aufgehängten Arbeitsaggregaten aus der in Fig. 1 gezeigten Arbeitsstellung in die in Fig. 4 gezeigte Vorgewendestellung auszuheben, werden die Druckkammern 52 und 53 des Zylinders 41 beaufschlagt, so dass die Kolbenstange 42 durch den Kolben 44 in den Zylinder 41 eingefahren wird, bis der Kolben 44 den genannten Endanschlag 55 erreicht. Diese Zwischenlage der Kolbenstange 42 wird festgehalten, da von der anderen Seite der Kolben 45 gegen die Kolbenstange 42 drückt.

Um die Arbeitsaggregate weiter auszuheben und in die Transportstellung zu fahren, wird der andere Zylinder 40 mit Druck beaufschlagt, um die Kolbenstange 42 in den Zylinder 40 einzufahren. Die Geometrieverhältnisse sind dabei derart getroffen, dass bei vollends eingefahrenem Zylinder 40 und dem in der genannten Weise in der Zwischenstellung gehaltenen Zylinder 41 die Schwenkachsen 9 am Tragrahmen 7 näherungsweise aufrecht stehen und die Seitenteile 31 - durch weitere Hydraulikzylinder - nach vorne an den Fahrrahmen 2 angeklappt werden können, wobei die Arbeitsaggregate, insbesondere die Schutzbügel 29 noch ein Stück weit über den Abstützflächen 28 zu liegen kommen. Um die Arbeitsaggregate vollends in die Transportstellung abzusetzen, d.h. auf die Abstützflächen 28 zu fahren und dabei die Schutzbarriere 22 hochzuschwenken, wird der Zylinder 41 drucklos geschaltet, so dass die Arbeitsaggregate noch ein Stück weit absenken können, was durch die nach vorne ziehende Gewichtskraft der Arbeitsaggregate selbst bewirkt wird.

Um umgekehrt die Arbeitsaggregate aus der Transportstellung wieder zurück in die Vorgewende- bzw. Arbeitsstellung zu verbringen, wird zunächst der Zylinder 41 wieder mit Druckbeaufschlagt, wodurch der Kolben 45 die Kolbenstange 42 ein Stück weit ausschiebt und hierdurch die Arbeitsaggregate ein Stück weit anhebt, so dass die Arbeitsaggregate von den Abstützflächen 28 freikommen und die Schutzbarriere 22 wieder abgesenkt wird. Hiernach können die Seitenteile wieder ausgeklappt und dann der Tragrahmen 7 durch Ausfahren des Zylinders 40 zurückgeschwenkt werden, bis die Vorgewendestellung erreicht ist. Durch erneutes Drucklosschalten des Zylinders 41 kann der Tragrahmen 7 in die Arbeitsstellung abgesenkt werden, wobei dies in gesteuerter Weise durch Steuern des Abflusses aus dem Zylinder 41 erfolgen kann.

## Patentansprüche

1. Landwirtschaftliche Maschine, vorzugsweise vielkreiseliger Zetter, mit einem an einen Schlepper anbaubaren Fahrrahmen (2), der über ein Fahrwerk (4) am Boden abgestützt ist, sowie zumindest einem Arbeitsaggregat (5) zur Futter- und/oder Bodenbearbeitung, das an einem Tragrahmen (7) gelagert ist, der relativ zum Fahrrahmen (2) zusammen mit dem Arbeitsaggregat (5) von einer Hubschwenkvorrichtung (19) aus einer Arbeitsstellung in eine Vorgewendestellung sowie weiter in eine Transportstellung aushebbar ist, wobei die Hubschwenkvorrichtung (19) eine Stellzylindereinheit (20) mit mehreren Zylindern (40, 41) und mehreren Kolben (43, 44, 45) umfaßt, **dadurch gekennzeichnet, dass** in zumindest einem der Zylinder (41) der Stellzylindereinheit (20) mehrere Kolben (44, 45) aufgenommen und relativ zu einer in dem Zylinder verschieblich aufgenommen Kolbenstange (42) verschieblich gelagert sind, wobei die mehreren Kolben (44, 45) verschiedene, jeweils begrenzte Verschiebebereiche relativ zur Kolbenstange besitzen, wobei einer der Kolben (44) auf der Kolbenstange (42) sitzt und relativ zur dieser verschieblich ist und der andere Kolben (45) dazu vorgesehen ist, gegen die Kolbenstange (42) zu drücken, wobei der Zylinder (41) einen nach innen vorspringenden Endanschlag (55) aufweist und die Kolbenstange (42) an ihrem freien Ende einen Endanschlag (51), die den genannten Kolben (44) gegen Herunterrutschen von der Kolbenstange (42) sichert, aufweist.

2. Landwirtschaftliche Maschine nach dem vorhergehenden Anspruch, wobei der Tragrahmen (7) um zumindest eine liegende Querachse (12; 13) schwenkbar an dem Fahrrahmen (2) angelenkt ist und wobei der Tragrahmen (7) zumindest ein abklappbares Seitenteil umfasst, das an einem Mittelteil (10) des Tragrahmens (7) schwenkbar angelenkt ist derart, dass das genannte Seitenteil in der abgesenkten Arbeitsstellung um liegende, in Fahrtrichtung weisende Achsen scharnieren und in der ausgehobenen Transportstellung zusammen mit dem an dem Seitenteil gelagerten Arbeitsaggregat (5) nach vorne an den Fahrrahmen (2) anklappbar ist.

3. Landwirtschaftliche Maschine nach dem vorhergehenden Anspruch, wobei eine Abstützfläche (28), insbesondere -mulde, zur Abstützung des zumindest einen Seitenteils (31) und/oder des daran gelagerten, zumindest einen Arbeitsaggregats (5) vorgesehen ist, und das Absetzen des Seitenteils (31) und/oder Arbeitsaggregats (5) auf der Abstützfläche (28) sowie das Anbeben des Seitenteils (31) und/oder Arbeitsaggregats (5) von der Abstützfläche (28) durch Beaufschlagung eines der beiden verschieblich zur Kolbenstange (42) gelagerten Kolben (45) steuerbar ist.

4. Landwirtschaftliche Maschine nach Anspruch 2 oder 3 , wobei an dem Fahrrahmen (2) eine Schutzbarriere (22) beweglich gelagert ist, die zwischen einer Schutzstellung, in der die Schutzbarriere (22) quer zur Fahrtrichtung (23) betrachtet vor den in Transportstellung befindlichen Arbeitsaggregaten (5) angeordnet ist, und einer Inaktivstellung, in der die in Transportstellung befindlichen Arbeitsaggregate (5) quer zur Fahrtrichtung (23) freiliegen, bewegbar ist, wobei die Schutzbarriere (22) durch Absenken der nach vorne an den Fahrrahmen (2) angeklappten Seitenteile des Tragrahmens (7) betätigbar und in ihre Schutzstellung verbringbar ist.

5. Landwirtschaftliche Maschine nach dem vorhergehenden Anspruch, wobei die Betätigung der Schutzbarriere (22) durch Beaufschlagung eines der beiden verschieblich zur Kolbenstange (42) gelagerten Kolben (45) steuerbar ist.

6. Landwirtschaftliche Maschine nach einem der beiden vorhergehenden Ansprüche, wobei ein mechanischer Betätiger (27), vorzugsweise in Form eines mit der Schutzbarriere zu einer Wippe zusammengefaßten Schwenkhebels, mit der Schutzbarriere (22) gekoppelt ist und derart angeordnet und ausgebildet ist, dass der Betätiger (27) mit einem Arbeitsaggregatsteil und/oder einem Tragrahmenteil in Eingriff bringbar ist, wenn das zumindest eine Arbeitsaggregat (5) auf seine Transportstellung zu bewegt wird und/oder in Transportstellung gelangt.

7. Landwirtschaftliche Maschine nach einem der vorhergehenden Ansprüche, wobei die Verschiebewege der beiden in demselben Zylinder (41) aufgenommenen Kolben (44, 45) auf der und/oder relativ zu der Kolbenstange (42) überlappungsfrei ausgebildet sind.

8. Landwirtschaftliche Maschine nach einem der vorhergehenden Ansprüche, wobei durch die beiden in demselben Zylinder (41) aufgenommenen Kolben (44, 45) zwei voneinander unabhängige Stellwege der Kolbenstange (42) relativ zu dem genannten Zylinder (41) erzeugbar sind, insbesondere derart, dass durch Beaufschlagung des einen Kolbens (44) unabhängig von der Beaufschlagung des anderen Kolbens ein erster Stellweg und durch Beaufschlagung des anderen Kolbens (45) unabhängig von der Beaufschlagung des vorgenannten einen Kolbens (44) ein anderer Stellweg erzeugbar ist.

9. Landwirtschaftliche Maschine nach dem vorhergehenden Anspruch, wobei die durch die beiden in demselben Zylinder (41) aufgenommenen Kolben (44, 45) erzeugbaren beiden Stellwege unterschiedlich lang sind, wobei vorzugsweise ein Stellweg weniger als ein Drittel des anderen Stellwegs beträgt.

10. Landwirtschaftliche Maschine nach einem der vorhergehenden Ansprüche, wobei einer der beiden in demselben Zylinder (41) aufgenommenen Kolben (44) zum Ausfahren der Kolbenstange (42) und der andere der beiden in demselben Zylinder (41) aufgenommenen Kolben (45) zum Einfahren der Kolbenstange (42) in den genannten Zylinder (41) vorgesehen ist.

11. Landwirtschaftliche Maschine nach einem der vorhergehenden Ansprüche, wobei der Zylinder (41), in dem die mehreren Kolben (44, 45) aufgenommen sind, zwischen den Kolben (44, 45) zumindest einen radial nach innen vorspringenden Anschlag besitzt, der die Stellwege der Kolben (44, 45) begrenzt und voneinander trennt, wobei der genannte Anschlag derart ausgebildet ist, dass die Kolbenstange (42) mit ihrem freien Ende an dem genannten Anschlag vorbeifahrbar ist.

12. Landwirtschaftliche Maschine nach einem der vorhergehenden Ansprüche, wobei der die mehreren Kolben (44, 45) aufnehmende Zylinder (41) auf voneinander abgewandten Seiten der Kolben (44, 45) zwei Druckkammern besitzt, wobei die beiden Druckkammern vorzugsweise von einer gemeinsamen Druckleitung her parallel geschaltet mit Druck beaufschlagbar sind derart, dass die Kolbenstange (42) in einer Zwischenlage von den beiden Kolben (44, 45) in deren Endstellung festgehalten und/oder eingeklemmt ist.

13. Landwirtschaftliche Maschine nach einem der vorhergehenden Ansprüche, wobei in zumindest einem der Zylinder (40) ein doppelseitig beaufschlagbarer Kolben vorgesehen ist, der vorzugsweise axial unverschieblich an der Kolbenstange befestigt ist, und/oder wobei zwei Zylinder (40, 41) auf einer gemeinsamen Kolbenstange (42) sitzen, wobei die genannte Kolbenstange (42) durch voneinander unabhängige ausführbare Stellbewegungen relativ zu dem einen Zylinder (40) ein- und ausfahrbar ist und relativ zu dem anderen Zylinder (41) ein- und ausfahrbar ist, und/oder wobei einer der Zylinder für einen Stellweg zwischen Vorgewendestellung und Transportstellung vorgesehen ist und ein anderer Zylinder für eine Stellbewegung zwischen Arbeitsstellung und Vorgewendestellung und für einen an die Transportstellung angrenzenden Stellweg vorgesehen ist.

## Claims

1. An agricultural machine, preferably a multi-rotor tedder, having a transport frame (2) attachable to a tractor and supported on the ground via a chassis (4) and having at least one piece of working equipment (5) for forage cultivation and/or soil cultivation which is supported at a support frame (7) which can be lifted relative to the transport frame (2) together with the piece of working equipment (5) by a pivoting lifting apparatus (19) from a work position into a headland position as well as further into a transport position, wherein the pivoting lifting apparatus (19) comprises an adjustment cylinder unit (20) having a plurality of cylinders (40, 41) and a plurality of pistons (43, 44, 45), **characterized in that** a plurality of pistons (44, 45) are received in at least one of the cylinders (41) of the adjustment cylinder unit (20), said plurality of pistons being displaceably supported relative to a piston rod (42) displaceably received in the cylinder, with the plurality of pistons (44, 45) having different, respectively bounded displacement regions relative to the piston rod, with one of the pistons (44) being seated on the piston rod (42) and being displaceable relative thereto and the other piston (45) being provided to press against the piston rod (42), with the cylinder (41) having an inwardly projecting end abutment (55) and the piston rod (42) having an end abutment (51) at its free end which secures the named piston (44) from slipping down from the piston rod (42).

2. An agricultural machine in accordance with the preceding claim, wherein the support frame (7) is connected in an articulated manner to the transport frame (2) pivotable about at least one horizontal transverse axis (12; 13), and the support frame (7) comprises at least one side part which can be folded and which is pivotably connected in an articulated manner to a middle part of the support frame (7) such that the named side part is hinged about axes facing in the direction of travel in the lowered working position and can folded forwards to the transport frame (2) together with the piece of working equipment (5) supported at the side part in the raised transport position.

3. An agricultural machine in accordance with the preceding claim, wherein a support surface (28), in particular a support depression, is provided for supporting the at least one side part (31) and/or the at least one piece of working equipment (5) supported thereat and the placing down of the side part (31) and/or of the piece of working equipment (5) on the support surface (28) and the raising of the side part (31) and/or of the piece of working equipment (5) from the support surface (28) is controllable by action on one of the two pistons (45) supported displaceably with respect to the piston rod (42).

4. An agricultural machine in accordance with claim 2 or claim 3, wherein a protective barrier (22) is movably supported at the transport frame (2) and is movable between a protective position, in which the protective barrier (22) is arranged, viewed transversely to the direction of travel (23), before the pieces of working equipment (5) located in the transport position, and an inactive position in which the pieces of working equipment (5) located in the transport position are exposed transversely to the direction of travel (23), with the protective barrier (22) being able to be actuated and brought into its protective position by lowering the side parts of the support frame (7) folded forwards to the transport frame (2).

5. An agricultural machine in accordance with the preceding claim, wherein the actuation of the protective barrier (22) is controllable by action on one of the two pistons (45) supported displaceably with respect to the piston rod (42).

6. An agricultural machine in accordance with one of the two preceding claims, wherein a mechanical actuator (27), preferably in the form of a pivot lever combined with the protective barrier to form a rocker, is coupled to the barrier (22) and is arranged and configured such that the actuator (27) can be brought into engagement with a part of the piece of working equipment and/or support frame part when the at least one piece of working equipment (5) is moved towards its transport position and/or moves into its transport position.

7. An agricultural machine in accordance with one of the preceding claims, wherein the displacement paths of the two pistons (44, 45) received in the same cylinder (41) are configured as free of overlap on and/or relative to the piston rod (42).

8. An agricultural machine in accordance with one of the preceding claims, wherein two mutually independent adjustment paths of the piston rod (42) relative to the named cylinder (41) can be generated by the two pistons (44, 45) received in the same cylinder (41), in particular such that a first adjustment path can be generated by the action on the one piston (44) independently of the action on the other piston and another adjustment path can be generated by the action on the other piston (45) independently of the action on the above-named one piston (44).

9. An agricultural machine in accordance with the preceding claim, wherein the two adjustment paths which can be generated by the two pistons (44, 45) received in the same cylinder (41) are of different lengths, with one adjustment path preferably amounting to less than a third of the other adjustment path.

10. An agricultural machine in accordance with one of the preceding claims, wherein one of the two pistons (44) received in the same cylinder (41) is provided for extending the piston rod (42) and the other of the two pistons (45) received in the same cylinder (41) is provided for retracting the piston rod (42) into the named cylinder (41).

11. An agricultural machine in accordance with one of the preceding claims, wherein the cylinder (41) in which the plurality of pistons (44, 45) are received has at least one radially inwardly projecting abutment between the pistons (44, 45), said abutment bounding the adjustment paths of the pistons (44, 45) and separating them from one another, with the named abutment being configured such that the free end of the piston rod (42) can be traveled past the named abutment.

12. An agricultural machine in accordance with one of the preceding claims, wherein the cylinder (41) receiving the plurality of pistons (44, 45) has two pressure chambers at mutually remote sides of the pistons (44, 45), with the two pressure chambers, connected in parallel, preferably being able to be acted on by pressure from a common pressure line such that the piston rod (42) is firmly held and/or is clamped in an intermediate position by the two pistons (44, 45) in their end positions.

13. An agricultural machine in accordance with one of the preceding claims, wherein, in at least one of the cylinders (40), a piston is provided which can be acted on at two sides and which is preferably fastened axially non-displaceably to the piston rod; and/or wherein two cylinders (40, 41) are seated on a common piston rod (42), with the named piston rod (42) being able to be retracted and extended relative to the one cylinder (40) and being able to retracted and extended relative to the other cylinder (41) by adjustment movements which can be carried out independently of one another; and/or wherein one of the cylinders is provided for an adjustment path between a headland position and a transport position and another cylinder is provided for an adjustment movement between a working position and a headland position and for an adjustment path adjacent to the transport position.

## Revendications

1. Machine agricole, de préférence épandeur-faneur combiné à centrifuge multiple, avec un châssis de transport annexable sur un tracteur (2), qui est appuyé au sol via un mécanisme de roulement (4), ainsi qu'au moins un groupe de travail (5) en vue du traitement des aliments et/ou du sol, qui est monté sur un cadre porteur (7), qui est levable par rapport au châssis de transport (2) ensemble avec le groupe de travail (5) à partir d'un dispositif orientable de levage (19) à partir d'une position de travail dans une position de retournement préalable, par ailleurs ainsi que dans une position de transport, le dispositif orientable de levage (19) comprenant une unité à cylindres de réglage (20) avec plusieurs cylindres (40, 41) et plusieurs pistons (43, 44, 45), **caractérisée en ce que**, dans au moins un des cylindres (41) de l'unité à cylindres de réglage (20), plusieurs pistons (44, 45) sont logés de manière décalable et par rapport à une des tiges de piston contenue de manière décalable dans le cylindre (42), les plusieurs pistons (44, 45) contenant différentes zones de décalage limitées respectivement par rapport à la tige de piston, un des pistons (44) étant assis sur la tige de piston (42) et étant décalable par rapport à celui-ci, et l'autre piston (45) étant prévu afin de presser contre la tige de piston (42), le cylindre (41) présentant une butée finale saillante vers l'intérieur (55) et la tige de piston (42) présentant à son extrémité libre une butée finale (51), qui protège ledit piston (44) contre le glissement hors de la tige de piston (42).

2. Machine agricole selon la revendication précédente, le cadre porteur (7) étant articulé de manière oscillante autour d'un axe transversal couché (12 ; 13) sur le châssis de transport (2) et le cadre porteur (7) comprenant au moins une partie latérale dépliante qui est articulée de manière oscillante sur une partie centrale (10) du cadre porteur (7) de sorte que ladite partie latérale est pliable dans la position de travail abaissée autour de charnières d'axe tournées dans le sens de la course et ensemble avec le groupe de travail logé sur la partie latérale vers l'avant sur le châssis de transport (2) avec le groupe de travail (5) logé sur la partie latérale.

3. Machine agricole selon la revendication précédente, une surface d'appui (28), notamment une cavité, est prévue pour l'appui d'au moins une partie latérale (31) et/ou d'au moins un groupe de travail logé dessus (5), et la dépose de la partie latérale (31) et/ou du groupe de travail (5) sur la surface d'appui (28) ainsi que la levée de la partie latérale (31) et/ou du groupe de travail (5) de la surface d'appui (28) est commandable par alimentation d'un des deux pistons (45) logés de manière décalable par rapport à la tige de piston (42).

4. Machine agricole selon la revendication 2 ou 3, une barrière de protection (22) étant logée de manière mobile sur le châssis de transport (2), qui est mobile entre une position de protection dans laquelle la barrière de protection (22) est disposée transversalement au sens de la marche (23) considéré en amont des groupes de transport (5) se trouvant en position de transport, et une position inactive, dans laquelle les groupes de transport (5) se trouvant en position de transport (5) sont découverts transversalement au sens de la marche (23), la barrière de protection (22) étant actionnable par abaissement des parties latérales rabattues vers l'avant du châssis de transport (7) et amenable dans sa position de protection.

5. Machine agricole selon la revendication précédente, l'actionnement de la barrière de protection (22) étant pilotable par alimentation d'un des deux pistons (45) logés de manière coulissante par rapport à la tige de piston (42).

6. Machine agricole selon une quelconque des deux revendications précédentes, un actionneur mécanique (27), de préférence sous la forme d'un levier orientable configuré en une bascule avec la barrière de protection, est couplé avec la barrière de protection (22), ainsi que disposé et agencé de sorte, que l'actionneur (27) est amenable en prise avec une pièce de groupe de travail et/ou une pièce de cadre porteur, lorsqu'au moins un groupe de travail (5) est déplacé vers sa position de transport et/ou parvient en position de transport.

7. Machine agricole selon une quelconque des revendications précédentes, les trajectoires de décalage des deux pistons (44, 45) logés de dans le même cylindre (41) étant agencées sans chevauchement sur et/ou par rapport à la tige de piston (42).

8. Machine agricole selon une quelconque des revendications précédentes, deux parcours de réglage de la tige de piston (42) indépendants l'un de l'autre étant générables par rapport audit cylindre, par les deux pistons (44, 45) intégrés dans le même cylindre (41) notamment de sorte que, par l'alimentation d'un premier piston (44), indépendamment de l'alimentation de l'autre piston, un premier parcours de réglage, et par l'alimentation de l'autre piston (45), indépendamment de l'alimentation dudit piston précité (44), un autre parcours de réglage est générable.

9. Machine agricole selon la revendication précédente, les deux parcours de réglage générables par les deux pistons (44, 45) logés dans le même cylindre (41) étant de longueur différente, un parcours de réglage s'élevant de préférence à moins d'un tiers de l'autre parcours de réglage.

10. Machine agricole selon une quelconque des revendications précédentes, un des deux pistons (44) logés dans le même cylindre (41) étant prévu pour la sortie de la tige de piston (42) et l'autre des deux pistons (45) logés de dans le même cylindre (41) étant prévu pour l'entrée de la tige de piston (42) dans ledit cylindre (41).

11. Machine agricole selon une quelconque des revendications précédentes, le cylindre, dans lequel sont logés les plusieurs pistons (44, 45) possédant entre les pistons (44, 45) au moins une butée saillante radialement vers l'intérieur, qui limite les parcours de réglage des pistons (44, 45) et les sépare l'un de l'autre, ladite butée étant agencée de sorte que la tige de piston (42) est apte à passer avec son extrémité libre devant ladite butée.

12. Machine agricole selon une quelconque des revendications précédentes, le cylindre (41) logeant les plusieurs pistons (44, 45) possédant deux chambres de compression, sur des côtés détournés l'un de l'autre des pistons (44, 45) les deux chambres de compression branchées de préférence en parallèle à partir d'une conduite de compression commune étant alimentables en pression de sorte que la tige de piston (42) est fixée et/ou serrée dans une position intermédiaire par les deux pistons (44, 45) dans leur position finale.

13. Machine agricole selon une quelconque des revendications précédentes, un piston alimentable bilatéralement étant prévu dans au moins un des cylindres (40), qui est fixé de préférence axialement et de manière non décalable sur la tige de piston, et/ou deux cylindres (40, 41) étant assis sur une tige de piston commune (42), ladite tige de piston (42) étant entrable et sortable par deux mouvements de réglage exécutables indépendamment l'un de l'autre par rapport à un cylindre (40) et étant entrable et sortable par rapport à l'autre cylindre (41) et/ou un des cylindres étant prévu pour un parcours de réglage entre la position de retournement et la position de transport et un autre cylindre étant prévu pour un mouvement de réglage entre la position de travail et la position de retournement et pour un parcours de réglage adjacent à la position de transport.
